# EUROPÄISCHE PATENTSCHRIFT

(11) **EP 1 790 519 B1**
(45) Veröffentlichungstag und Bekanntmachung des Hinweises auf die Patenterteilung: **23.07.2008**
(21) Anmeldenummer: 06021239.6
(22) Anmeldetag: 10.10.2006
(51) Int. Cl.: B60K 28/06

(54) **Verfahren und Vorrichtung zur Lenkradüberwachung**
Method and device for monitoring a steering wheel
Procédé et dispositif pour la surveillance du volant

(30) Priorität: 26.11.2005 DE 102005056438
(43) Veröffentlichungstag der Anmeldung: 30.05.2007
(73) Patentinhaber: Volkswagen Aktiengesellschaft, 38436 Wolfsburg (DE)
(72) Erfinder: Babbel, Eckhard, 38100 Braunschweig (DE); Seitz, Gordon, 38468 Ehra-Lessien (DE); Chlosta, Sven, 38547 Calberlah (DE); Karrenberg, Simon, 38527 Meine (DE); Kreft, Jörg, 38162 Destedt/Cremlingen (DE)

(56) Entgegenhaltungen:
- WO-A-01/94188
- WO-A-03/039914
- DE-A1- 10 210 130
- DE-A1- 19 806 458
- JP-A- 2005 088 792
- US-A1- 2001 003 436

## Beschreibung

Die Erfindung betrifft ein Verfahren und eine Vorrichtung zur Lenkradüberwachung, d.h., zur Bestimmung der Frage, ob der Fahrer eines Kraftfahrzeugs während des Fahrbetriebs die Hände am Lenkrad hält oder nicht, also das Lenkrad ergriffen hat oder nicht, nach dem Oberbegriff des Anspruchs 1 bzw. des Anspruchs 9.

Zur Erhöhung der Fahrsicherheit eines Kraftfahrzeugs im Straßenverkehr werden zunehmend Fahrerassistenzsysteme eingesetzt, welche auf die Erhöhung der aktiven Sicherheit gerichtet sind. Dies sind beispielsweise ADR-Systeme (Automatische Distanzregelung), auch bekannt als ACC-System (Autonomes Cruise Control), bei denen sowohl eine Geschwindigkeitsregelung als auch eine Abstandsregelung miteinander verknüpft sind. Bei Annäherung eines Eigenfahrzeugs an ein vorausfahrendes Kraftfahrzeug wird die Eigengeschwindigkeit beim Unterschreiten eines Mindestabstandes automatisch herabgesetzt, um den Mindestabstand zu dem vorausfahrenden Kraftfahrzeug einzuhalten.

Weiter sind Spurhaltesysteme bekannt, die auch als HC-Systeme (Heading Control) genannt sind, bei denen mittels einer entsprechenden Sensorik die Fahrspur erkannt und das Fahrzeug durch entsprechend erzwungenen Lenkvorgänge auf der Fahrspur gehalten wird. Diese Systeme setzen beispielsweise eine elektromotorisch unterstützte Lenkung voraus.

Ferner sind Kombinationen aus ADR- und HC-Systemen in der Entwicklung. Um nun eine weitere Verbesserung der aktiven Sicherheit zu erreichen, ist es notwendig, den Fahrer des Kraftfahrzeugs hinsichtlich seiner Reaktionsfähigkeit zu überwachen, da beispielsweise bei einem übermüdeten Fahrer auch die genannten Fahrassistenzsysteme versagen. Eine derartige Überwachung des Fahrers und eine anschließende Qualifikation seines Zustandes sind auf verschiedene Art und Weise möglich, so kann beispielsweise die Lenkaktivität und/oder das Beschleunigungs- und Bremsverhalten des Fahrers überwacht und ausgewertet werden. Eine grundlegende Frage bei der Überwachung der Fahreraktivität ist, ob der Fahrer während der Fahrt überhaupt das Lenkrad erfasst hat oder nicht. Hat er das Lenkrad nicht erfasst, so liegt die Vermutung nahe, dass der Fahrer sich in einem Zustand eingeschränkter Aktionsfähigkeit befindet, und das Maßnahmen, beispielsweise in Form einer Warnung, ergriffen werden müssen.

Die gattungsbildende DE 198 06 458 A1 beschreibt eine Kraftfahrzeugtenkvorrichtung zum Lenken eines Kraftfahrzeugs mittels eines Lenkmechanismus, der nicht mechanisch mit einer Lenkbetätigungseinrichtung verbunden ist. Dabei weist die Fahrzeuglenkvorrichtung eine Freihandfahrt-Erkennungsvorrichtung zum Erkennen des freihändigen Fahrens auf, die mittels eines mit der Lenkbetätigungsvorrichtung verbundenen Drehmomentsensors das Lenkdrehmoment sowie Veränderungen des Lenkdrehmoments am Lenkrad bestimmt. Das ermittelte Lenkdrehmoment wird mit einem vorgegebenen Wert verglichen, um zu erkennen, ob freihändiges Fahren vorliegt oder nicht.

Der Erfindung liegt daher die Aufgabe zugrunde, ein Verfahren und eine Vorrichtung zur Lenkradüberwachung, d.h. zur Klärung der Frage, ob der Fahrer eines Kraftfahrzeuges das Lenkrad ergriffen hat oder nicht, zu schaffen.

Diese Aufgabe wird durch ein Verfahren mit den Merkmalen des Anspruchs 1 sowie durch eine Vorrichtung mit den Merkmalen des Anspruchs 9 gelöst. Bevorzugte Ausführungsformen der Erfindung sind Gegenstand der Unteransprüche.

Das erfindungsgemäße Verfahren zur Lenkradüberwachung, d.h., zur Bestimmung der Frage, ob der Fahrer eines Kraftfahrzeuges das Lenkrad ergriffen hat oder nicht, umfasst die folgenden Schritte:
- Messen von solchen Parametern des Lenkrades, die das Systemverhalten des Lenkrades eines Kraftfahrzeugs bestimmen,
- Auswerten der gemessenen Parameter,
- Vergleichen der ausgewerteten Parameter mit Referenzparametern, wobei die Referenzparameter entweder die Situation des Lenkrades wiedergeben, in welcher der Fahrer das Lenkrad ergriffen hat, oder die Fahrsituation wiedergeben, in welcher der Fahrer das Lenkrad nicht ergriffen hat,
- Erzeugen eines Signals, wenn die Abweichung zwischen ausgewerteten und referenzierten Parametern größer als eine vorgegebene Schranke bzw. Schwelle ist, wobei
- Beschleunigungen am Lenkrad als Systemparameter ermittelt werden.

Die weiteren Parameter, welche das Systemverhalten des Lenkrads bestimmen, sind beispielsweise Momente am Lenkrad, Eigenfrequenz des Lenkrades, das Nichtvorliegen von vom Fahrer verursachten Lenkradbewegungen und/oder die Reaktion des Lenkrades bei Aktivitäten des Lenksystems und/oder die Dämpfung des Lenkrades, Insbesondere können die Parameter durch eine Bestimmung der Momentenwerte und/oder des Lenkwinkels ermittelt werden.

Weiter bevorzugt werden die Beschleunigungen am Lenkrad und die Beschleunigungen an einer Referenzstelle, beispielsweise der Lenkradsäule, gemessen, wobei aus den Spektren der gemessenen Beschleunigungen eine Übertragungsfunktion gebildet wird, welche mit einer Referenzübertragungsfunktion verglichen wird. Sind die Abweichungen zwischen der aus den Beschleunigungen bestimmten Übertragungsfunktion und der Referenzübertragungsfunktion größer als ein vorgegebenes Maß, so wird ein Signal generiert. Dabei werden vorzugsweise die am Lenkrad gemessenen Beschleunigungen um den Lenkwinkel korrigiert.

Vorzugsweise wird eine dominierende Frequenz der Übertragungsfunktion identifiziert und die identifizierte dominierende Frequenz wird mit einer Referenzresonanzfrequenz verglichen. Insbesondere kann die dominierende Resonanzfrequenz aus der Übertragungsfunktion, der Motordrehzahl und der Fahrzeuggeschwindigkeit bestimmt werden, wobei in diesem Falle die Referenzresonanzfrequenz ebenfalls vorzugsweise eine Funktion von Fahrzeuggeschwindigkeit und Motordrehzahl ist.

Vorzugsweise wird aus dem durch den Vergleich zwischen gemessenen Parametern und Referenzparametern abgeleiteten Signal eine Warnung an den Fahrer erzeugt, beispielsweise eine optische und/oder akustische und/oder haptische Warnung.

Eine erfindungsgemäße Vorrichtung zur Durchführung des Verfahrens zur Lenkradüberwachung umfasst mindestens einen am Lenkrad angeordneten und als Beschleunigungssensor ausgebildeten Sensor zur Bestimmung von System parametern sowie ein Steuergerät zum Auswerten der Systemparameter und zum Vergleichen der ausgewerteten Systemparameter mit Referenzparameter, die vorzugsweise in einer mit dem Steuergerät verbundenen Speichereinrichtung gespeichert sind. Ferner umfasst die Vorrichtung eine Einrichtung zum Erzeugen eines Ausgangssignals im Falle eines positiven Vergleichsergebnisses und umfasst vorzugsweise eine Einrichtung zum Warnen des Fahrers, die mit den Ausgangssignal beaufschlagt wird.

Bevorzugt ist an der Lenkradsäule ein weiterer Referenzsensor, beispielsweise ein weiterer Beschleunigungssensor angeordnet. Weiterhin kann die Vorrichtung einen Lenkwinkel-Detektor aufweisen, wobei die Beschleunigungssignale des am Lenkrad angeordneten Beschleunigungssensors um den Lenkwinkel korrigiert werden. Weiterhin kann die Vorrichtung eine Einrichtung zur Fourier-Transformation der gemessenen Beschleunigungssignale aufweisen, wobei aus den Fourier-transformierten der Beschleunigungssignale in dem Steuergerät eine Übertragungsfunktion ermittelt wird. Vorzugsweise weist die Vorrichtung weiterhin eine Einrichtung zur Bestimmung der dominierenden Resonanzfrequenz der Übertragungsfunktion auf, so dass sich der Vergleich auf einen Vergleich zwischen der bestimmten dominierenden Resonanzfrequenz und einer gespeicherten Referenzresonanzfrequenz beschränkt.

Bevorzugte Ausführungsformen der Erfindung werden nachfolgend anhand der Zeichnungen näher erläutert.
- Fig. 1: zeigt ein Blockschaltbild des erfindungsgemäßen Lenkradüberwachungssystems,
- Fig. 2: zeigt das Grundschema der Parameterbestimmung und -verarbeitung,
- Fig. 3: zeigt die Korrektur der Beschleunigung des Lenkrades in schematischer Darstellung, und
- Fig. 4: zeigt eine Darstellung einer bestimmten Übertragungsfunktion und einer Referenzübertragungsfunktion.

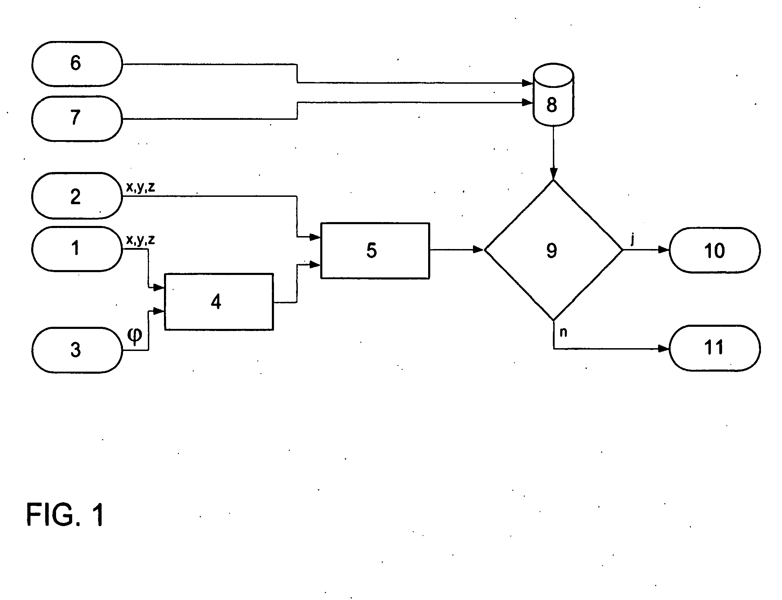

Fig. 1 zeigt die erfindungsgemäße Vorrichtung zur Lenkradüberwachung als Blockschaltbild in schematischer Darstellung. Ein Lenkradsensor 1 ermittelt Beschleunigungen des Lenkrades (nicht dargestellt) in den drei Raumrichtungen X, Y und Z. Parallel dazu werden die Beschleunigungen an einer weiteren Position mittels eines Referenzsensors 2 ebenfalls in den drei Raumrichtungen X, Y und Z ermittelt. Die Beschleunigungssignale des Lenkradsensors 1 werden in einem Korrigierer 4 hinsichtlich des Lenkwinkels ϕ eines Lenkwinkelsensors 3 korrigiert. Mittels der korrigierten Beschleunigungen des Lenkradsensors 1 sowie der Beschleunigungen in den drei Raumrichtungen X, Y und Z des Referenzsensors wird in einer Einrichtung 5 die Übertragungsfunktion des Systems Lenkrad gebildet. Diese Übertragungsfunktion ist naturgemäß eine Funktion der Fahrzeuggeschwindigkeit sowie der Motordrehzahl. Die durch die Einrichtung 5 erzeugte Übertragungsfunktion wird einem Vergleicher 9 zugeführt, der die Übertragungsfunktion mit einer Referenzübertragungsfunktion vergleicht, die beispielsweise in einem Speicher oder einer entsprechenden Datenbank 8 abgelegt ist. Üblicherweise ist die Referenzübertragungsfunktion ebenfalls eine Funktion der Fahrzeuggeschwindigkeit und der Motordrehzahl, so dass die durch den Drehzahlsensor 6 sowie Geschwindigkeitssensor 7 ermittelten tatsächlichen Fahrzeuggeschwindigkeit und Motordrehzahl zur Auswahl der entsprechenden Referenzübertragungsfunktion aus dem Speicher 8 herangezogen werden. Der im Vergleicher 9 durchgeführte Vergleich zwischen der Übertragungsfunktion und der ausgewählten Referenzübertragungsfunktion wird üblicherweise durch eine Differenzbildung und Vergleich mit einer vorgegebenen Schwelle bzw. Schwellenfunktion durchgeführt. Im vorliegenden Fall betrifft die Referenzübertragungsfunktion die Situation, in welcher der Fahrer keine Hände am Lenkrad hat. Liegt daher keine Abweichung zwischen der Referenzübertragungsfunktion und der gemessenen Übertragungsfunktion vor, so wird ein Signal ausgegeben am Ausgang 11, welches anzeigt, dass der Fahrer keine Hände am Lenkrad hat. Ist der Vergleich hingegen positiv, d.h., es gibt eine Abweichung zwischen der Referenzübertragungsfunktion und der gemessenen Übertragungsfunktion, so wird kein Signal erzeugt, was hier durch den Ausgang 10 mit der Bezeichnung "ignorieren" dargestellt wird.

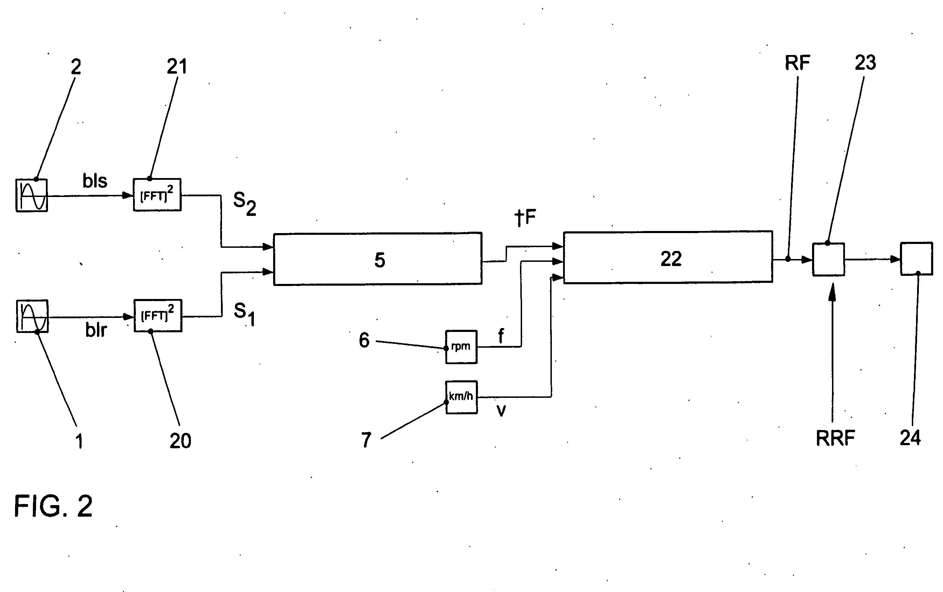

Fig. 2 zeigt den Rechenweg der Vorrichtung nach Fig. 1 in schematischer Darstellung in einer weiteren Ausführungsform. Die durch die Sensoren 1 und 2 ermittelten Beschleunigungen des Lenkrades B_{LR} sowie des Referenzsensors 2 an der Lenksäule b_{LS} werden jeweils in Einrichtungen 20, 21 zur Fourier-Transformation Fourier-transformiert und quadriert, und es ergeben sich die Spektren S₁ und S₂ der gemessenen Beschleunigungen. Diese Frequenzspektren S₁, S₂ der Beschleunigungen werden einer Einrichtung 5 zur Erzeugung der Übertragungsfunktion zugeführt und eine Übertragungsfunktion ÜF erzeugt. Diese Übertragungsfuriktion wird zusammen mit der Fahrzeuggeschwindigkeit v und der Motordrehzahl 11, die durch die entsprechenden Sensoren 6, 7 ermittelt wird, einer Einrichtung zur Identifikation der dominierenden Frequenz der Übertragungsfunktion 22 zugeführt. In dieser Identifikationseinrichtung 22 wird die dominierende Frequenz der Übertragungsfunktion ermittelt, welche abhängig ist von der Anregung, d.h., abhängig ist von der Fahrzeuggeschwindigkeit sowie der Motordrehzahl in erster Näherung. Weitere Einflüsse der dominierenden Identifikationsfrequenz könnten an dieser Stelle ebenfalls berücksichtigt werden. Die so ermittelte dominierende Resonanzfrequenz RF wird einem Frequenzvergleicher 23 zugeführt, dort mit der Referenzresonanzfrequenz RRF verglichen. Dabei ist die Referenzresonanzfrequenz ebenfalls eine Funktion der Geschwindigkeit und Motordrehzahl in erster Näherung. Gibt die Referenzresonanzfrequenz das Lenkrad verhalten für die Situation wieder, in welcher der Fahrer das Lenkrad nicht hält, so zeigt eine Differenz oberhalb einer vorgegebenen Schwelle an, dass der Fahrer das Lenkrad ergriffen hat, so dass kein Signal erzeugt wird. Im anderen Fall, in dem die Resonanzfrequenz mit der Referenzresonanzfrequenz übereinstimmt, wird ein Ausgangssignal 24 erzeugt.

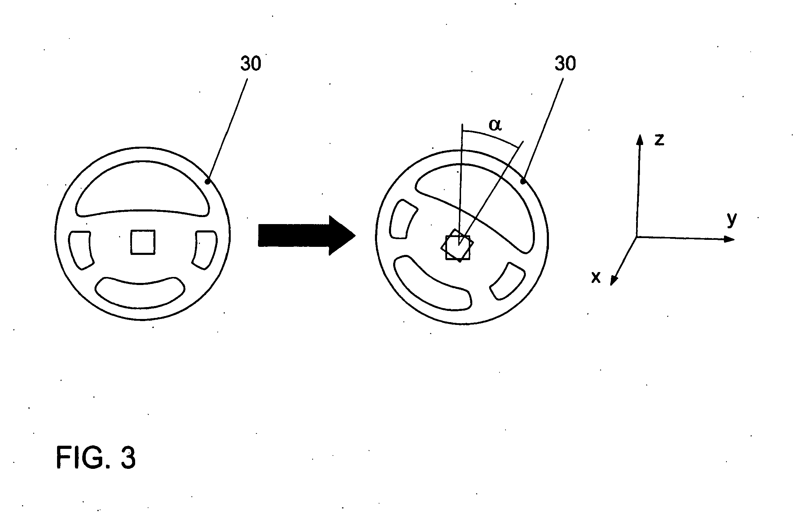

Fig. 3 zeigt in schematischer Darstellung ein Lenkrad 30, welches um einen Lenkwinkel α gedreht wird. Die Koordinatensysteme sind nun so angeordnet, dass die Y- und Z-Koordinate die Ebene des Lenkradkranzes erzeugt, während die X-Komponente senkrecht zum Lenkrad angeordnet ist.

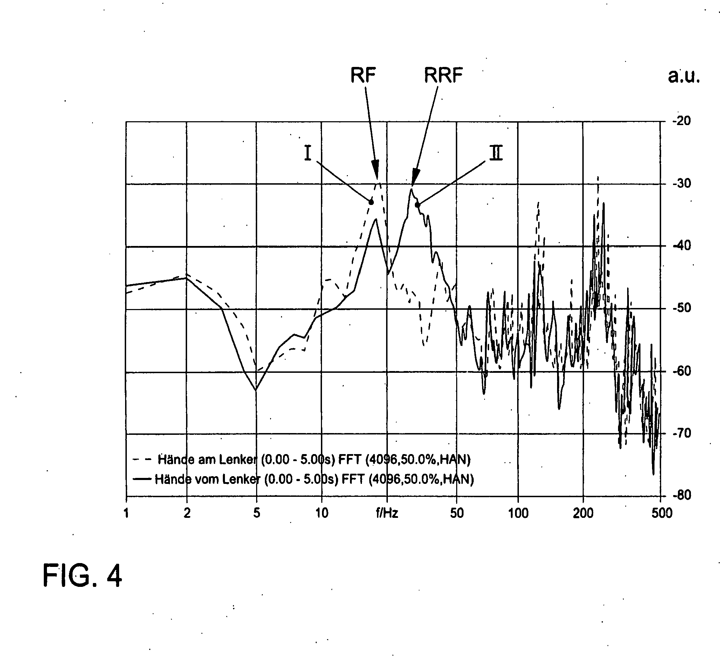

Fig. 4 schließlich zeigt in graphischer Darstellung zwei Übertragungsfunktionen mit den dominierenden Frequenzen RF und RRF. Dabei zeigt die Kurve I den Verlauf der gemessenen Übertragungsfunktion für den Fall, dass der Fahrer die Hand am Lenkrad hat, während die Referenzübertragungsfunktion 2 den Fall wiedergibt, in welcher der Fahrer das Lenkrad nicht ergreift. Deutlich erkennbar ist die Differenz zwischen den dominierenden Resonanzfrequenzen RF und RRF, so dass in diesem Falle keine Warnung erzeugt wird.

### Bezugszeichenliste

- 1: Lenkradsensor
- 2: Referenzsensor
- 3: Lenkwinkeldetektion
- 4: Korrigierer
- 5: Übertragungsfunktion
- 6: Drehzahlsensor
- 7: Geschwindigkeitssensor
- 8: Referenzübertragungsfunktion
- 9: Vergleicher
- 10: Ausgang "Ignorieren"
- 11: Ausgang "Signal"
- 20: Fouriertransformation
- 21: Fouriertransformation
- 22: Identifikation Resonanzfrequenz
- 23: Vergleicher der Resonanzfrequenz
- 24: Ausgangssignal
- 30: Lenkrad
- bLS: Beschleunigung Lenksäule
- bLR: Beschleunigung Lenkrad
- S1: Spektrum
- S2: Spektrum
- ÜF: Übertragungsfunktion
- f: Drehzahl
- v: Geschwindigkeit
- RF: dominierende Resonanzfrequenz
- RRF: Referenzresonanzfrequenz

## Patentansprüche

1. Verfahren zur Bestimmung, ob ein Fahrer eines Kraftfahrzeugs das Lenkrad ergriffen hat oder nicht, wobei das Verfahren die folgenden Schritte aufweist:
a) Messen von Systemverhalten bestimmenden Parametern des Lenkrades (30) des Kraftfahrzeugs,
b) Auswerten der in a) bestimmten Parameter,
c) Vergleichen der ausgewerteten Parameter mit Referenzparametern, wobei die Referenzparameter entweder die Lenkradsituation wiedergeben, in welcher der Fahrer das Lenkrad (30) ergriffen hat, oder die Lenkradsituation wiedergeben, in welcher der Fahrer das Lenkrad (30) nicht ergriffen hat, und
d) Erzeugen eines Signals, wenn die Abweichung zwischen ausgewerteten und referenzierten Parametern größer als eine vorgegebene Schranke ist
**dadurch gekennzeichnet, dass**
Beschleunigungen am Lenkrad (30) als Systemparameter gemessen werden.

2. Verfahren nach Anspruch 1, **dadurch gekennzeichnet, dass** die das Systemverhalten des Lenkrads bestimmenden weiteren Parameter ausgewählt sind aus der Gruppe Momente am Lenkrad, Eigenfrequenz des Lenkrads, keine vom Fahrer verursachte Lenkradbewegung, Reaktion des Lenkrads bei Lenksystemaktivitäten.

3. Verfahren nach Anspruch 2, **dadurch gekennzeichnet, dass** die weiteren Parameter durch eine Momenten- und/oder Lenkwinkelbestimmung ermittelt werden.

4. Verfahren nach einem der vorangegangenen Ansprüche, **dadurch gekennzeichnet, dass** die Beschleunigungen am Lenkrad und an der Lenkradsäute (blr, bls) gemessen werden, wobei aus den Spektren der gemessenen Beschleunigungen (blr, bls) eine Übertragungsfunktion (ÜF) gebildet wird , die mit einer Referenzübertragungsfunktion verglichen wird.

5. Verfahren nach Anspruch 4, **dadurch gekennzeichnet, dass** die gemessenen Beschleunigungen des Lenkrads (blr) um den Drehwinkel (α) korrigiert werden.

6. Verfahren nach einem der Ansprüche 4 oder 5, **dadurch gekennzeichnet, dass** die dominierende Frequenz (RF) der Übertragungsfunktion (ÜF) identifiziert wird und die identifizierte dominierende Frequenz (RF) mit einer vorgegebenen Referenzresonanzfrequenz (RRF) verglichen wird.

7. Verfahren nach Anspruch 6, **dadurch gekennzeichnet, dass** die dominierende Resonanzfrequenz (RF) aus der Übertragungsfunktion (ÜF), der Motordrehzahl (f) und der Fahrzeuggeschwindigkeit (v) bestimmt wird, wobei die Referenzresonanzfrequenz (RF) eine Funktion der Motordrehzahl (f) und Fahrzeuggeschwindigkeit (v) ist.

8. Verfahren nach einem der vorangegangenen Ansprüche, **dadurch gekennzeichnet, dass** aus dem erzeugten Signal eine Warnung an den Fahrer abgeleitet wird.

9. Vorrichtung zur Bestimmung des Zustandes eines Lenkrades (30) eines Kraftfahrzeugs unter Verwendung des Verfahrens nach einem der vorangegangenen Ansprüche, mit einer ein Lenkrad (30) aufweisenden Lenkvorrichtung eines Kraftfahrzeugs,
einem am Lenkrad (30) angeordneten Sensor (1) zur Bestimmung von mindestens einem lenkradspezifischen Systemparameter,
einem Steuergerät zum Auswerten der Systemparameter und zum Vergleichen der ausgewerteten Systemparameter mit Referenzparameter, und
einer Einrichtung zum Erzeugen eines Ausgangssignals im Falle eines positiven Vergleichsergebnisses,
**dadurch gekennzeichnet, dass**
der am Lenkrad (30) angeordnete Sensor (1) durch einen Beschleunigungssensor gebildet wird.

10. Vorrichtung nach Anspruch 9, **dadurch gekennzeichnet, dass** die Vorrichtung eine Einrichtung zum Warnen des Fahrers aufweist, die mit den Ausgangssignal beaufschlagt wird.

11. Vorrichtung nach einem der Ansprüche 9 oder 10, **dadurch gekennzeichnet, dass** die Referenzparameter in einer mit dem Steuergerät verbundenen Speichereinrichtung gespeichert sind.

12. Vorrichtung nach einem der Ansprüche 9 bis 11, **dadurch gekennzeichnet, dass** an der Lenkradsäule ein weiterer Sensor (2) zur Erzeugung eines Referenzsignals angeordnet ist.

13. Vorrichtung nach Anspruch 12, **dadurch gekennzeichnet, dass** der weitere Sensor (2) ein weiterer Beschleunigungssensor ist.

14. Vorrichtung nach einem der Ansprüche 9 bis 13, **dadurch gekennzeichnet, dass** die Vorrichtung einen Lenkwinkel-Detektor (3) aufweisen, wobei die Beschleunigungssignale des am Lenkrad angeordneten Sensors (1) um den Lenkwinkel (α) korrigiert werden.

15. Vorrichtung nach einem der Ansprüche 9 bis 14, **dadurch gekennzeichnet, dass** die Vorrichtung eine Einrichtung zur Fourier-Transformation (20, 21) der gemessenen Beschleunigungssignale aufweisen, wobei aus den Fourier-Transformierten der Beschleunigungssignale in dem Steuergerät eine Übertragungsfunktion (ÜF) ermittelt wird.

16. Vorrichtung nach Anspruch 15, **dadurch gekennzeichnet, dass** die Vorrichtung eine Einrichtung zur Bestimmung der dominierenden Resonanzfrequenz (RF) der Übertragungsfunktion (ÜF) und einen Vergleicher (23) aufweist, der die bestimmte dominierenden Resonanzfrequenz (RF) und einer gespeicherten Referenzresonanzfrequenz (RRF) vergleicht.

## Claims

1. Method for determining whether or not a driver of a motor vehicle has grasped the steering wheel, wherein the method has the following steps:
a) measurement of parameters of the steering wheel (30) of the motor vehicle which determine system behaviour,
b) evaluation of the parameters determined in a),
c) comparison of the evaluated parameters with reference parameters wherein the reference parameters either represent the steering wheel situation in which the driver has grasped the steering wheel (30) or represent the steering wheel situation in which the driver has not grasped the steering wheel (30), and
d) generation of a signal if the deviation between the evaluated and referenced parameters is greater than a predefined limit,
**characterized in that**
accelerations at the steering wheel (30) are measured as system parameters.

2. Method according to Claim 1, **characterized in that** the further parameters which determine the system behaviour of the steering wheel are selected from the group of torques at the steering wheel, natural frequency of the steering wheel, no steering wheel movement caused by the driver, reaction of the steering wheel during periods of inactivity of the steering system.

3. Method according to Claim 2, **characterized in that** the further parameters are required by determining torques and/or steering angles.

4. Method according to one of the preceding claims **characterized in that** the accelerations at the steering wheel and/or at the steering wheel column (blr, bls) are measured, wherein a transmission function (ÜF) which is compared with a reference transmission function is formed from the ranges of the measured accelerations (blr, bls).

5. Method according to Claim 4, **characterized in that** the measured accelerations of the steering wheel (blr) are corrected by the value of the rotational angle (α).

6. Method according to one of Claims 4 or 5, **characterized in that** the dominant frequency (RF) of the transmission function (ÜF) is identified and the identified dominant frequency (RF) is compared with a predefined reference resonant frequency (RRF).

7. Method according to Claim 6, **characterized in that** the dominant resonant frequency (RF) is determined from the transmission function (ÜF), the engine speed (f) and the velocity (v) of the vehicle, wherein the reference resonant frequency (RF) is a function of the engine speed (f) and velocity (v) of the vehicle.

8. Method according to one of the preceding claims, **characterized in that** a warning to the driver is derived from the generated signal.

9. Device for determining the state of a steering wheel (30) of a motor vehicle using the method according to one of the preceding claims, having a steering device of a motor vehicle which has a steering wheel (30),
a sensor (1) which is arranged on the steering wheel (30) and has the purpose of determining at least one steering-wheel specific system parameter,
a control unit for evaluating the system parameters and for comparing the evaluated system parameters with reference parameters, and
a device for generating an output signal in the case of a positive comparison result,
**characterized in that**
the sensor (1) which is arranged on the steering wheel (30) is formed by an acceleration sensor.

10. Device according to Claim 9, **characterized in that** the device has an apparatus for warning the driver, to which apparatus the output signal is applied.

11. Device according to one of Claims 9 or 10, **characterized in that** the reference parameters are stored in a memory device connected to the control unit.

12. Device according to one of Claims 9 to 11, **characterized in that** a further sensor (2) for generating a reference signal is arranged on the steering wheel column.

13. Device according to Claim 12, **characterized in that** the further sensor (2) is a further acceleration sensor.

14. Device according to one of Claims 9 to 13, **characterized in that** the device has a steering angle detector (3), wherein the acceleration signals of the sensor (1) which is arranged on the steering wheel are corrected by the value of the steering angle (α).

15. Device according to one of Claims 9 to 14, **characterized in that** the device has an apparatus for performing a Fourier transformation (20, 21) on the measured acceleration signals, wherein a transmission function (ÜF) is acquired from the Fourier transforms of the acceleration signals in the control unit.

16. Device according to Claim 15, **characterized in that** the device has an apparatus for determining the dominant resonant frequency (RF) of the transmission function (ÜF) and a comparator (23) which compares the determined dominant resonant frequency (RF) and a stored reference resonant frequency (RRF).

## Revendications

1. Procédé de détermination de si oui ou non un conducteur d'un véhicule automobile a saisi le volant, le procédé comportant les étapes suivantes :
a) mesure de paramètres du volant (30) du véhicule automobile déterminant le comportement du système;
b) analyse des paramètres déterminés en a) ;
c) comparaison des paramètres analysés avec des paramètres de référence, les paramètres de référence rendant soit la position du volant dans laquelle le conducteur a saisi le volant (30), soit la position du volant dans laquelle le conducteur n'a pas saisi le volant (30) ; et
d) émission d'un signal lorsque l'écart entre les paramètres analysés et les paramètres référencés est supérieur à une valeur seuil prédéfinie ;
**caractérisé en ce que**
les accélérations au niveau du volant (30) sont mesurées comme des paramètres du système.

2. Procédé selon la revendication 1, **caractérisé en ce que** les autres paramètres définissant le comportement du système du volant sont sélectionnés dans le groupe comprenant les moments du volant, la fréquence propre du volant, les mouvements du volant non provoqués par le conducteur, la réaction du volant en situation d'activité du système de direction.

3. Procédé selon la revendication 2, **caractérisé en ce que** les paramètres supplémentaires sont calculés par une détermination du moment et/ou de l'angle de direction.

4. Procédé selon l'une quelconque des revendications précédentes, **caractérisé en ce que** les accélérations au niveau du volant et de la colonne de direction (blr, bls) sont mesurées, une fonction de transfert (ÜF) pouvant être comparée à une fonction de transfert de référence étant formée à partir des spectres des accélérations (blr, bls) mesurées.

5. Procédé selon la revendication 4, **caractérisé en ce que** les accélérations mesurées du volant (blr) peuvent être corrigées de l'angle de rotation (α).

6. Procédé selon l'une quelconque des revendications 4 ou 5, **caractérisé en ce que** la fréquence dominante (RF) de la fonction de transfert (ÜF) est identifiée et **en ce que** la fréquence dominante (RF) identifiée est comparée à une fréquence de résonance de référence (RRF) prédéfinie.

7. Procédé selon la revendication 6, **caractérisé en ce que** la fréquence de résonance dominante (RF) est déterminée à partir de la fonction de transfert (ÜF), de la vitesse de rotation du moteur (f) et de la vitesse du véhicule (v), la fréquence de résonance de référence (RF) étant fonction de la vitesse de rotation du moteur (f) et de la vitesse du véhicule (v).

8. Procédé selon l'une quelconque des revendications précédentes, **caractérisé en ce qu'**un avertissement est donné au conducteur à partir du signal émis.

9. Dispositif de détermination de l'état d'un volant (30) d'un véhicule automobile en utilisant le procédé selon l'une quelconque des revendications précédentes, avec un dispositif de direction d'un véhicule automobile comportant un volant (30) ;
un capteur (1) disposé sur le volant (30) pour déterminer au moins un paramètre du système spécifique au volant ;
un appareil de commande pour analyser les paramètres du système et pour comparer les paramètres du système analysés aux paramètres de référence ; et
un dispositif d'émission d'un signal de sortie en cas de résultat positif de la comparaison ;
**caractérisé en ce que**
le capteur (1) disposé sur le volant (30) prend la forme d'un capteur d'accélération.

10. Dispositif selon la revendication 9, **caractérisé en ce que** le dispositif comprend un dispositif d'avertissement du conducteur qui est alimenté par le signal de sortie.

11. Dispositif selon l'une quelconque des revendications 9 ou 10, **caractérisé en ce que** les paramètres de référence sont mémorisés dans une unité de mémorisation reliée à l'appareil de commande.

12. Dispositif selon l'une quelconque des revendications 9 à 11, **caractérisé en ce qu'**un capteur (2) supplémentaire est disposé au niveau de la colonne de direction pour émettre un signal de référence.

13. Dispositif selon la revendication 12, **caractérisé en ce que** le capteur (2) supplémentaire prend la forme d'un capteur d'accélération supplémentaire.

14. Dispositif selon l'une quelconque des revendications 9 à 13, **caractérisé en ce que** le dispositif comprend un détecteur d'angle de direction (3), les signaux d'accélération du capteur (1) disposé au niveau du volant étant corrigés de l'angle de direction (α).

15. Dispositif selon l'une quelconque des revendications 9 à 14, **caractérisé en ce que** le dispositif comporte un dispositif de transformation de Fourier (20, 21) des signaux d'accélération mesurés, une fonction de transfert (ÜF) étant déterminée dans l'appareil de commande à partir des transformations de Fourier des signaux d'accélération.

16. Dispositif selon la revendication 15, **caractérisé en ce que** le dispositif comprend un dispositif de détermination de la fréquence de dominante résonance (RF) de la fonction de transfert (ÜF) et un comparateur (23) qui compare la fréquence de résonance dominante (RF) définie et une fréquence de résonance de référence (RRF) mémorisée.
